# EUROPÄISCHE PATENTSCHRIFT

(11) **EP 0 692 667 B1**
(45) Veröffentlichungstag und Bekanntmachung des Hinweises auf die Patenterteilung: **20.11.1996**
(21) Anmeldenummer: 94110251.9
(22) Anmeldetag: 01.07.1994
(51) Int. Cl.: F16L 47/00

(54) **Rohrverbindung**
Pipe coupling
Raccord de tuyaux

(43) Veröffentlichungstag der Anmeldung: 17.01.1996
(73) Patentinhaber: R. Woeste & Co. GmbH & Co. KG, D-42551 Velbert (DE)
(72) Erfinder: Woeste, Albrecht, Dipl.-Ing., D-40237 Düsseldorf (DE); Lieber, Gerhard, D-42579 Heiligenhaus (DE); Nowottny, Peter, D-40591 Düsseldorf (DE)
(74) Vertreter: Stenger, Watzke & Ring Patentanwälte

(56) Entgegenhaltungen:
- EP-A- 0 537 377
- DE-A- 3 306 192
- DE-B- 1 239 898

## Beschreibung

Die Erfindung betrifft eine Rohrverbindung für Gas- und Wasserleitungen zwischen einem Metallrohr und einem Kunststoffrohr, insbesondere zum Anschluß von in Gebäuden verlegten Rohren an das im Boden verlegte Gas- bzw. Wasserversorgungsnetz, mit einer glockenartigen Muffe, die unter Einschluß mindestens eines Dichtungsringes an der Verbindungsstelle angeordnet und von einem muffenartigen Spritzgußformstück umgeben ist, das einstückig mit dem Kunststoffrohrstück ausgebildet ist.

Derartige Rohrverbindungen sind beispielsweise aus der EP-A1 537 377 bekannt. Obwohl sich die bekannten Rohrverbindungen in der Praxis bewährt haben, besitzen sie den Nachteil, daß sie nur mit einem verhältnismäßig grossen Konstruktions- und Herstellungsaufwand hergestellt werden können.

Der Erfindung liegt die Aufgabe zugrunde, eine Rohrverbindung der eingangs beschriebenen Art zwecks Vereinfachung Ihrer Konstruktion und Herstellung bei gleichzeitiger Verbesserung der erzielbaren Dichtigkeit weiterzubilden.

Die Lösung dieser Aufgabenstellung durch die Erfindung ist dadurch gekennzeichnet, daß das Metallrohr mit einer Kunststoffumhüllung versehen ist, in der eine mindestens bis an die Metallrohroberfläche reichende Nut für den Dichtungsring ausgebildet ist und auf die die aus Kunststoff hergestellte Muffe aufgesteckt ist, und daß die Muffe zusammen mit dem angrenzenden Teil der Kunststoffumhüllung durch Verschmelzung mit dem Spritzgußformstück verbunden ist.

Da die Kunststoffumhüllung das Metallrohr ganzflächig umgibt und mit der Metallrohroberfläche innig verbunden ist, kann anstelle der bekannten Muffe aus Metall eine Muffe aus Kunststoff auf das Ende des kunststoffummantelten Metallrohres aufgesteckt werden. Die Muffe überdeckt hierbei mindestens einen zuvor in eine Nut der Kunststoffumhüllung eingelegten Dichtungsring. Anschließend wird die Muffe zusammen mit dem angrenzenden Teil der auf dem Metallrohr befindlichen Kunststoffumhüllung im Spritzgußverfahren mit einem Formstück umgeben, dessen Material sich sowohl mit der Kunststoffumhüllung als auch der Muffe verbindet, so daß sich zwei unabhängig voneinander wirkende Abdichtungen ergeben, und zwar einerseits durch den zwischen Metallrohr und Muffe angeordneten Dichtungsring und zum anderen durch die Verschmelzung des Materials der Kunststoffumhüllung und der Muffe mit dem des Spritzgußformstückes.

Gegenüber den bekannten Rohrverbindungen besitzt die erfindungsgemäße Rohrverbindung einen besonders einfachen konstruktiven Aufbau, der neben der Verwendung eines kunststoffummantelten Metallrohres mindestens einen Dichtungsring, die Muffe und das Spritzgußformstück umfaßt. Trotz dieser Konstruktions- und Herstellungsvereinfachung wird gleichzeitig die Sicherheit der Rohrverbindung vergrößert, da - wie voranstehend erläutert - zwei unabhängig voneinander wirksame Abdichtungen zur Anwendung kommen, die jeweils für sich alleine bereits ausreichen, die notwendige Dichtigkeit der Rohrverbindung herzustellen.

Um eine innige Verbindung zwischen der Muffe und der Kunststoffumhüllung des Metallrohres sicherzustellen, kann gemäß einem Merkmal der Erfindung die Kunststoffumhüllung im Bereich der Muffe im Außendurchmesser verkleinert sein, beispielsweise durch spanabhebende Bearbeitung.

Gemäß der Erfindung kann zwischen der Muffe und dem Dichtungsring ein Verstärkungsring angeordnet sein, der vorzugsweise aus Metall hergestellt ist. Da dieser Verstärkungsring vor der Aufbringung der Muffe auf das mit dem Dichtungsring versehene Metallrohr aufgeschoben wird, ergibt sich bereits bei Beginn der Montage eine zuverlässige Anpressung des Dichtungsringes, die über die gesamte Lebensdauer der Rohrverbindung durch den Verstärkungsring aufrechterhalten wird.

Bei einer bevorzugten Ausführungsform der Erfindung sind zwei Dichtungsringe angeordnet, von denen einer im Bereich der aufgesteckten Muffe angeordnet ist. Vorzugsweise sind die Dichtungsringe als O-Ringe aus Kunststoff hergestellt. Sie können erfindungsgemäß jeweils in einer bis in das Metall des Metallrohres reichenden Nut angeordnet sein.

Das Metallrohr wird vorzugsweise aus Stahl hergestellt, die Kunststoffumhüllung des Metallrohres, die Muffe und das Spritzgußformstück vorzugsweise aus Polyäthylen.

Vorzugsweise sind an dem zum Kunststoffrohr weisenden Ende des Metallrohres, insbesondere zwischen seinem Ende und der aufgesteckten Muffe, Bohrungen ausgebildet, die von dem Material des Spritzgußformstücks ausgefüllt sind. Dadurch wird der Verbund verbessert.

Auf der Zeichnung ist ein Ausführungsbeispiel der erfindungsgemäßen Rohrverbindung dargestellt, und zwar zeigen:
- Fig. 1: in der oberen Hälfte einen Längsschnitt und in der unteren Hälfte eine Ansicht der Rohrverbindung,
- Fig. 2: eine in der oberen Hälfte geschnittene Ansicht des für die Rohrverbindung nach Fig. 1 verwendeten Metallrohres,
- Fig. 3: einen Längsschnitt bzw. eine Seitenansicht der für die Rohrverbindung verwendeten Muffe und
- Fig. 4: den in Fig. 1 verwendeten Verstärkungsring, in der oberen Hälfte geschnitten.

Die anhand des Ausführungsbeispiels dargestellte Rohrverbindung besteht aus einem Metallrohr 1 und einem Kunststoffrohr 2, die denselben Innendurchmesser aufweisen. Zumindest im Endbereich ist das Metallrohr 1 mit einer Kunststoffumhüllung 3 versehen, die vorzugsweise werksseitig aufgebracht wurde.

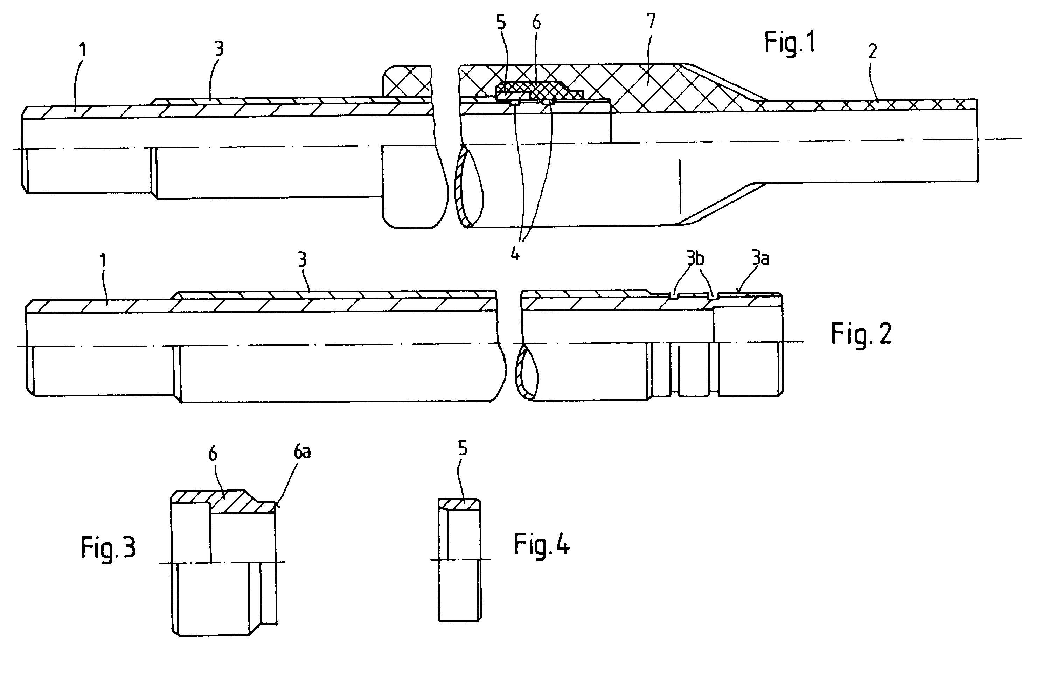

Wie insbesondere aus Fig. 2 hervorgeht, ist die Kunststoffumhüllung 3 im Endbereich 3a im Durchmesser verkleinert, vorzugsweise durch spanabhebende Bearbeitung. Weiterhin sind in diesem Endbereich 3a zwei Nuten 3b ausgebildet, die beim Ausführungsbeispiel gemäß Fig. 2 nicht nur bis an die Metallrohroberfläche, sondern in das Material des Metallrohres 1 hineinreichen. In diesen Nuten 3b ist jeweils ein Dichtungsring 4 angeordnet. Diese Dichtungsringe 4 sind in Fig. 1 zu erkennen. Sie sind vorzugsweise als O-Ring ausgebildet und vorzugsweise aus einem Elastomer (Kunststoff, Gummi u.s.w.) hergestellt.

Im Bereich des einen Dichtungsringes 4 ist ein Verstärkungsring 5 angeordnet, der aus thermoplastischem Kunststoff bestehen kann, vorzugsweise jedoch aus Metall hergestellt wird. Dieser Verstärkungsring 5 ist im Längsschnitt bzw. in der Seitenansicht als Einzelteil in Fig. 4 dargestellt. Er bewirkt ein zuverlässiges Anpressen des Dichtungsringes 4 in der Nut 3b.

Auf den im Durchmesser verkleinerten Endbereich 3a der Kunststoffumhüllung 3 wird eine Muffe 6 aus Kunststoff aufgesteckt. Die in Fig. 3 als Einzelteil dargestellte Muffe 6 überdeckt hierbei sowohl den Verstärkungsring 5 als auch den in der zweiten Nut 3b angeordneten Dichtungsring 4.

Wie schließlich aus Fig. 1 hervorgeht, wird abschließend ein muffenartiges Spritzgußformstück 7 aus Kunststoff im Spritzgußverfahren aufgebracht, das sowohl die Muffe 6 als auch den angrenzenden Bereich der Kunststoffumhüllung 3 umschließt und an das das Kunststoffrohr 2 einstückig angeformt ist. Das Material des Spritzgußformstückes 7 verbindet sich bei der Herstellung mit dem Material sowohl der Kunststoffumhüllung 3 als auch der Muffe 6, so daß sich eine zuverlässige und vollständig abgedichtete Verbindung des Kunststoffrohres 2 mit dem Metallrohr 1 ergibt. Diese umfaßt zwei unabhängig voneinander wirksame Abdichtungen. Die eine, durch den einen Dichtungsring 4 unterstützte Abdichtung ergibt sich durch das Verschmelzen des Materials des Spritzgußformstückes 7 und der Muffe 6 mit dem Material der Kunststoffumhüllung 3. Die zweite Abdichtung erfolgt durch den mittels des Verstärkungsringes 5 belasteten zweiten Dichtungsring 4.

### Bezugszeichenliste

- 1: Metallrohr
- 2: Kunststoffrohr
- 3: Kunststoffumhüllung
- 3a: Endbereich
- 3b: Nut
- 4: Dichtungsring
- 5: Verstärkungsring
- 6: Muffe
- 6a: Stirnfläche
- 7: Spritzgußformstück

## Patentansprüche

1. Rohrverbindung für Gas- und Wasserleitungen zwischen einem Metallrohr (1) und einem Kunststoffrohr (2), insbesondere zum Anschluß von in Gebäuden verlegten Rohren an das im Boden verlegte Gas- bzw. Wasserversorgungsnetz, mit einer glockenartigen Muffe (6), die unter Einschluß mindestens eines Dichtungsringes (4) an der Verbindungsstelle angeordnet und von einem muffenartigen Spritzgußformstück (7) umgeben ist, das einstückig mit dem Kunststoffrohrstück ausgebildet ist,
**dadurch gekennzeichnet**,
daß das Metallrohr (1) mit einer Kunststoffumhüllung (3) versehen ist, in der eine mindestens bis an die Metallrohroberfläche reichende Nut (3b) für den Dichtungsring (4) ausgebildet ist und auf die die aus Kunststoff hergestellte Muffe (6) aufgesteckt ist, und daß die Muffe (6) zusammen mit dem angrenzenden Teil der Kunstoffumhüllung (3) durch Verschmelzung mit dem Spritzgußformstück (7) verbunden ist.

2. Rohrverbindung nach Anspruch 1, dadurch gekennzeichnet, daß die Kunststoffumhüllung (3) im Bereich (3a) der Muffe (6) im Außendurchmesser verkleinert ist.

3. Rohrverbindung nach Anspruch 1 oder 2, dadurch gekennzeichnet, daß zwischen der Muffe (6) und dem Dichtungsring (4) ein Verstärkungsring (5) angeordnet ist.

4. Rohrverbindung nach Anspruch 3, dadurch gekennzeichnet, daß der Verstärkungsring (5) aus Metall hergestellt ist.

5. Rohrverbindung nach mindestens einem der Ansprüche 1 bis 4, dadurch gekennzeichnet, daß zwei Dichtungsringe (4) angeordnet sind, von denen einer im Überdeckungsbereich der Kunststoffumhüllung (3) des Metallrohres (1) mit der Muffe (6) angeordnet ist.

6. Rohrverbindung nach mindestens einem der Ansprüche 1 bis 5, dadurch gekennzeichnet, daß die Dichtungsringe (4) als O-Ringe aus Kunststoff hergestellt sind.

7. Rohrverbindung nach mindestens einem der Ansprüche 1 bis 6, dadurch gekennzeichnet, daß die Dichtungsringe (4) jeweils in einer auch im Material des Metallrohres (1) ausgebildeten Nut (3b) angeordnet sind.

8. Rohrverbindung nach mindestens einem der Ansprüche 1 bis 7, dadurch gekennzeichnet, daß das Metallrohr (1) aus Stahl hergestellt ist.

9. Rohrverbindung nach mindestens einem der Ansprüche 1 bis 8, dadurch gekennzeichnet, daß die Kunststoffumhüllung (3) des Metallrohres (1), die Muffe (6) und das Spritzgußformstück (7) aus Polyäthylen hergestellt sind.

10. Rohrverbindung nach mindestens einem der Ansprüche 1 bis 9, dadurch gekennzeichnet, daß das Metallrohr (1) an seinem zum Kunststoffrohr (2) weisenden Endbereich Bohrungen aufweist.

## Claims

1. Pipe coupling for gas and water lines between a metal pipe (1) and a plastic pipe (2), in particular for the connection of pipes laid in buildings to the gas or water supply network laid in the ground, having a bell-like sleeve (6), which is arranged at the coupling point such that it encloses at least one sealing ring (4) and is surrounded by a sleeve-like injection-moulded piece (7), which is formed in one piece with the plastic pipe piece, characterized in that the metal pipe (1) is provided with a plastic covering (3), in which there is formed a groove (3b), which reaches down at least as far as the metal pipe surface, for the sealing ring (4), and onto which there is fitted the sleeve (6) produced from plastic, and in that the sleeve (6) is bonded together with the adjacent part of the plastic covering (3) by fusion with the injection-moulded piece (7).

2. Pipe coupling according to Claim 1, characterized in that the plastic covering (3) is reduced in outside diameter in the region (3a) of the sleeve (6).

3. Pipe coupling according to Claim 1 or 2, characterized in that a reinforcing ring (5) is arranged between the sleeve (6) and the sealing ring (4).

4. Pipe coupling according to Claim 3, characterized in that the reinforcing ring (5) is produced from metal.

5. Pipe coupling according to at least one of Claims 1 to 4, characterized in that two sealing rings (4) are arranged, of which one is arranged in the region of overlap of the plastic covering (3) of the metal pipe (1) with the sleeve (6).

6. Pipe coupling according to at least one of Claims 1 to 5, characterized in that the sealing rings (4) are produced from plastic as O-rings.

7. Pipe coupling according to at least one of Claims 1 to 6, characterized in that the sealing rings (4) are arranged in each case in a groove (3b) formed also in the material of the metal pipe (1).

8. Pipe coupling according to at least one of Claims 1 to 7, characterized in that the metal pipe (1) is produced from steel.

9. Pipe coupling according to at least one of Claims 1 to 8, characterized in that the plastic covering (3) of the metal pipe (1), the sleeve (6) and the injection-moulded piece (7) are produced from polyethylene.

10. Pipe coupling according to at least one of Claims 1 to 9, characterized in that the metal pipe (1) has bores on its end region facing the plastic pipe (2).

## Revendications

1. Raccord de tuyaux pour des conduites de gaz ou d'eau entre un tuyau métallique (1) et un tuyau plastique (2), notamment pour raccorder des tuyaux posés dans des bâtiments au réseau d'alimentation en gaz ou en eau posé dans le sol, avec un manchon (6) en forme de cloche qui est placé à l'endroit du raccord en incluant au moins un anneau d'étanchéité (4) et qui est entouré par une pièce moulée par injection (7) en forme de manchon qui est construite d'une pièce avec le tronçon de tuyau plastique,
caractérisé en ce que
le tuyau métallique (1) est muni d'une gaine plastique (3), dans laquelle une rainure (3b) qui va au moins jusqu'à la surface du tuyau métallique est conçue pour l'anneau d'étanchéité (4) et sur laquelle le manchon (6) fabriqué en plastique est rapporté, et le manchon (6) est lié par fusion, en même temps que la partie adjacente de la gaine plastique (3), à la pièce moulée par injection (7).

2. Raccord de tuyaux selon la revendication 1, caractérisé en ce que le diamètre extérieur de la gaine plastique (3) est réduit dans la zone (3a) du manchon (6).

3. Raccord de tuyaux selon la revendication 1 ou 2, caractérisé en ce qu'un anneau de renfort (5) est agencé entre le manchon (6) et l'anneau d'étanchéité (4).

4. Raccord de tuyaux selon la revendication 3, caractérisé en ce que l'anneau de renfort (5) est fabriqué en métal.

5. Raccord de tuyaux selon au moins l'une des revendications 1 à 4, caractérisé en ce que deux anneaux d'étanchéité (4) sont agencés, l'un étant agencé dans la zone de recouvrement de la gaine plastique (3) du tuyau métallique (1) avec le manchon (6).

6. Raccord de tuyaux selon au moins l'une des revendications 1 à 5, caractérisé en ce que les anneaux d'étanchéité (4) sont fabriqués sous forme d'anneaux toriques en plastique.

7. Raccord de tuyaux selon au moins l'une des revendications 1 à 6, caractérisé en ce que les anneaux d'étanchéité (4) sont agencés chacun dans une rainure (3b) formée aussi dans la matière du tuyau métallique (1).

8. Raccord de tuyaux selon au moins l'une des revendications 1 à 7, caractérisé en ce que le tuyau métallique (1) est fabriqué en acier.

9. Raccord de tuyaux selon au moins l'une des revendications 1 à 8, caractérisé en ce que la gaine plastique (3) du tuyau métallique (1), le manchon (6) et la pièce moulée par injection (7) sont fabriqués en polyéthylène.

10. Raccord de tuyaux selon au moins l'une des revendications 1 à 9, caractérisé en ce que le tuyau métallique (1) comporte des trous sur son extrémité située du côté du tuyau plastique (2).
